# EUROPÄISCHE PATENTANMELDUNG

(11) **EP 1 026 508 A1**
(43) Veröffentlichungstag der Anmeldung: **09.08.2000**
(21) Anmeldenummer: 00101841.5
(22) Anmeldetag: 29.01.2000
(51) Int. Cl.: G01P 13/00, F16N 29/02, F16N 29/04

(54) **Flusswächter für ein fliessendes Medium**

(30) Priorität: 01.02.1999 DE 19903941
(71) Anmelder: BIELOMATIK LEUZE GmbH + Co., D-72639 Neuffen (DE)
(72) Erfinder: Neumann, Gunther, 72622 Raidwangen (DE)
(74) Vertreter: Patentanwälte Ruff, Beier, Schöndorf und Mütschele

(57) **Zusammenfassung**

Der Flußwächter (1) weist als Fühler (23) ein druckempfindliches Glied auf, gegen welches eine Druckmündung (28) gerichtet ist und das eine Meßkammer (25) begrenzt. Außer an die Mündung (28) ist die Kammer (25) nur an verengte Öffnungen, nämlich einen Auslaß (29) und einen Fluideinlaß (30) angeschlossen, so daß der Sensor (21) gut anspricht. Am Gehäusekörper (8) der Kammer (25) ist unmittelbar das Gehäuse (15) eines Zuneßventiles (9) angeordnet, welches die Mündung (28) mit dosierten Mengen des Mediums versorgt. Dadurch ergibt sich bei günstigen Strömungsverhältnissen eine sehr einfache Ausbildung des Flußwächters (1).

## Beschreibung

Die Erfindung betrifft einen Flußwächter, mit dem auch kontinuierlich oder diskontinuierlich in sehr kleinen Mengen fließendes Medium, z.B. Fett oder Schmieröl zur Minimalmengen-Schmierung, überwacht werden kann. Ein solcher Wächter wird als Erfassungs- oder Meßvorrichtung in einer Leitung angeordnet, durch welche das Medium von einem stromaufwärts des Wächters liegenden Druckerzeuger unter Überdruck durch den Wächter zur stromabwärts im Abstand vom Wächter liegenden Austragstelle, wie einer Schmierstelle einer Maschine, gefördert wird. Der Wächter erfaßt dabei, ob der Medienfluß stattfindet oder nicht.

Das Medium kann ohne oder mit einem Zweitmedium, wie einem Förderfluid, einem Gas, Luft o. dgl. an die Schmierstelle gefördert werden. Als Fühler kann zwar ein Temperaturfühler verwendet werden, jedoch muß hierzu das Medium eine von der Umgebungstemperatur signifikant abweichende Temperatur aufweisen, beispielsweise durch Erwärmung vor der Meßkammer. Auch kann der Fühler zur Störung eines Meßfeldes, wie einer Lichtschranke, eines Magnetfeldes o. dgl., bewegbar sein, jedoch schließt er dann in Ausgangslage die Mündung für das Medium, wodurch große Strömungswiderstände auftreten. Ferner kann der Fühler stromabwärts von der Schmierstelle liegen, jedoch ergibt sich dadurch eine reduzierte Genauigkeit des Erfassungsergebnisses. Wird als Fühler ein Schwimmer vorgesehen, ist die Erfassung sehr träge, weil eine entsprechende Menge Öl in den Schwimmerraum überführt werden muß.

Der Erfindung liegt auch die Aufgabe zugrunde, einen Flußwächter der genannten Art zu schaffen, bei welchem Nachteile bekannter Ausbildungen bzw. der beschriebenen Art vermieden sind. Insbesondere soll der Wächter bei einfachem bzw. kompaktem Aufbau eine zuverlässige Funktion oder eine hohe Genauigkeit der Durchfluß-Erfassung haben.

Erfindungsgemäß wird der Fühler von dem Medium in einer Meßkammer beaufschlagt, in welcher die Strömung des oder der Medien dann beruhigt ist, wenn der Medienstrom die Meßkammer durchquert und dann auf die Kontrollfläche des Fühlers trifft. Die Meßkammer ist daher in mindestens zwei der drei zueinander rechtwinkligen Koordinatenrichtungen größer als die Mündung für das Medium, wobei eine Koordinatenrichtung in der Mittelachse der Meßkammer liegen kann. Besonders zweckmäßig ist es, wenn der Fühler als auf die mechanische Strömungsenergie des Mediums reagierender Strömungsfühler, beispielsweise als Druck- oder Prallaufnehmer, ausgebildet ist. In diesem Fall kann die Meßkammer eine Druckkammer bilden, in welcher sich der durch das eintretende Medium erhöhende Druck nach allen Seiten gleichmäßig ausbreitet und auch so den Fühler bzw. dessen Kontrollfläche betätigt.

Zu diesem Zweck kann die Meßkammer an eine einzige, nur zwei oder nur drei Anschluß- bzw. Verbindungsöffnungen angeschlossen sein, die gesondert im Abstand voneinander liegen. Der Durchlaßquerschnitt jeder dieser Öffnungen kann gegenüber demjenigen der Meßkammer mehrfach kleiner sein. Dadurch ergibt sich an dieser Öffnung beim Druckaufbau in der Meßkammer ein Staudruck, welcher das Ansprechen des Fühlers verbessert. Die Kontrollfläche bzw. ein diese aufweisender Bereich des Fühlers kann durch die Druckwechsel bewegt werden und dadurch einen Meßstrom verändern, von welchem eine Steuerung für den Medienfluß, die Schmierstelle, eine Anzeige o. dgl. abgeleitet wird. Der Fühler kann dabei nur ein digitales Signal allein für den Fluß und das Ausbleiben des Flusses abgeben. Der Fühler kann aber auch über den Meßstrom ein kontinuierlich proportional sich änderndes Signal für die jeweilige Menge des Medienflusses abgeben.

Besonders zweckmäßig ist es, wenn die Meßkammer permanent mit einer Mischkammer über einen verengten Kanal oder dadurch kommuniziert, daß Meß- und Mischkammer durch denselben Raum ohne dazwischen liegende Verengung gebildet sind. In der Mischkammer wird das Medium mit dem Zweitmedium, beispielsweise Luft, feinst zerstäubt vermischt. Der Einlaß für das Zweitmedium, das bis zu diesem Fluideinlaß keine vernebelten oder anderen Bestandteile des flüssigen Mediums mit sich führt, bildet dabei eine der genannten Anschluß- und Verbindungsöffnungen. Sowohl die Mündung für das Medium als auch der Fluideinlaß können kleinere Durchlaßquerschnitte als der Auslaß aus der Kammer haben. Der Durchlaßquerschnitt der Mündung ist kleiner als derjenige des Fluideinlasses. Der Mündungsdurchmesser liegt unter einem Millimeter und der Durchmesser des Fluideinlasses unter zwei Millimeter, während der Durchmesser des Auslasses unter drei Millimeter liegt.

Die Meßkammer ist zweckmäßig achssymmetrisch zu ihrer Mittelachse, beispielsweise im Querschnitt kreisrund. Diese Mittelachse liegt quer oder rechtwinklig zur Mittelachse des Auslasses und schneidet dessen Achse wie auch die Achse des Fluideinlasses. In der Mittelachse der Kammer liegt die Mündung für das Medium, die daher im Abstand von und zwischen den beiden übrigen Staudurchlässen, nämlich dem Fluideinlaß und dem Auslaß liegt. Die Kontrollfläche bildet eine Prallfläche, an welcher das mit hohem Überdruck gegen sie strömende Medium zerstäubt und dann sofort über die gesamte Meßkammer verteilt wird, so daß es feinst verteilt vom Zweitmedium aufgenommen werden kann, während gleichzeitig der Fühler durch den Medienstrahl beeinflußt wird.

Unabhängig von den beschriebenen Ausbildungen bildet das die Meßkammer vollständig umschließende Anschlußgehäuse bzw. dessen einteiliger Gehäusekörper eine integrale Einheit mit einem Dosiergehäuse, aus welchem das Medium genau dosiert unmittelbar in die Meßkammer gedrückt wird. Das Dosiergehäuse und/oder ein Sensorgehäuse des Fühlers könnte einteilig mit dem Anschlußgehäuse ausgebildet sein. Ist zur Verbindung der Gehäuse mindestens eine Gewindeverbindung vorgesehen, so kann die Weite der Meßkammer, insbesondere deren Axialerstreckung, kontinuierlich verändert und diese Veränderung zur Justierung des Wächters herangezogen werden.

Insbesondere die Schmierung schnell laufender Wälzlager, z.B. in Werkzeugmaschinen-Spindeln, kann mit dem Flußwächter überwacht werden, um eine Zerstörung bei Mangelschmierung zu vermeiden. In die Meßkammer wird das Öl in kleinsten Mengen von weniger als 30 oder 20 mm³ diskontinuierlich und rechtwinklig gegen die Kontrollfläche geschossen. Gleichzeitig kann in die Meßkammer radial permanent, also auch während der Pausen der Ölzufuhr, Gas eingeleitet und in der Kammer sofort strömungsberuhigt werden, so daß der Ölschuß dieses beruhigte Fluid ohne wesentliche Beeinflussung des Meßergebnisses bis zur Kontrollfläche durchquert. Die Meßkammer kann aber auch nicht von Luft durchströmt sein, beispielsweise wenn die Mischkammer gesondert von der Meßkammer vorgesehen ist und über eine Zweigleitung mit dem Öl dann versorgt wird, wenn ein entsprechend hoher Druck in der Meßkammer das Öl durch Rückstau in die Mischkammer umleitet. Vom Auslaß wird das Öl über eine Leitung, wie ein Rohr, direkt zur Schmierstelle gefördert. Diese Leitung ist mehr als einen halben oder 1,5 Meter lang und kann konstante Durchlaßquerschnitte haben, die gleich demjenigen des Auslasses sind und bis zu diesem reichen. Der Innendurchmesser dieser Leitung bzw. des Auslasses beträgt z.B. 2,5 mm. In der Leitung strömt das Öl teilweise als Aerosol und teilweise als Wendelfilm entlang der Leitungswandung.

Als von der Kontrollfläche beeinflußtes Sensor- bzw. Steuerglied kann ein Nährungsschalter, wie ein induktiver Initiator, ein Piezoelement, ein Dehnmeßstreifen o. dgl. vorgesehen sein, durch welchen der Meßstrom als Funktion der unterschiedlichen Lagen der Kontrollfläche verändert wird.

Diese und weitere Merkmale der Erfindung gehen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Ausführungsbeispiele der Erfindung sind in den Zeichnungen dargestellt und werden im folgenden näher erläutert. In den Zeichnungen zeigen:
- Fig. 1: einen erfindungsgemäßen Flußwächter, teilweise im Axialschnitt,
- Fig. 2: den Fühler gemäß Fig. 1 in Axialansicht und vergrößerter Darstellung,
- Fig. 3: eine weitere Ausführungsform in einer Darstellung ähnlich Fig. 1 und
- Fig. 4: eine dritte Ausführungsform in einer Darstellung ähnlich Fig. 3.

Der Flußwächter 1 dient zur Überwachung der Medienzufuhr zu einer Anwendungsstelle 2, wie einer Schmierstelle eines Wälzlagers o. dgl. Dem Wächter 1 wird das nicht gasförmige, fließfähige Medium über eine nicht näher dargestellte Zuleitung 3, wie ein Rohr, zugeführt. Die Zuführung wird dann im Wächter 1 erfaßt. Danach wird das Medium quer zur Zuleitung 3 über eine Ableitung 4 durch den Zuleitungsdruck bis an einen Austritt 6 gefördert, von welchem es unmittelbar an die Stelle 2 gelangt. Die Ableitung 4 kann bis zur Öffnung 6 durch ein einteiliges Rohr mit konstanten Innenquerschnitten gebildet sein. Über eine weitere Zuleitung 5, ebenfalls ein Rohr oder ein flexibler Schlauch, wird im Wächter 1 dem Medium noch ein nicht flüssiges Fördermedium, wie Luft, zugeführt, mit dem Medium vermischt und dann als Mischstrom über die Ableitung 4 aus der Öffnung 6 ausgetragen.

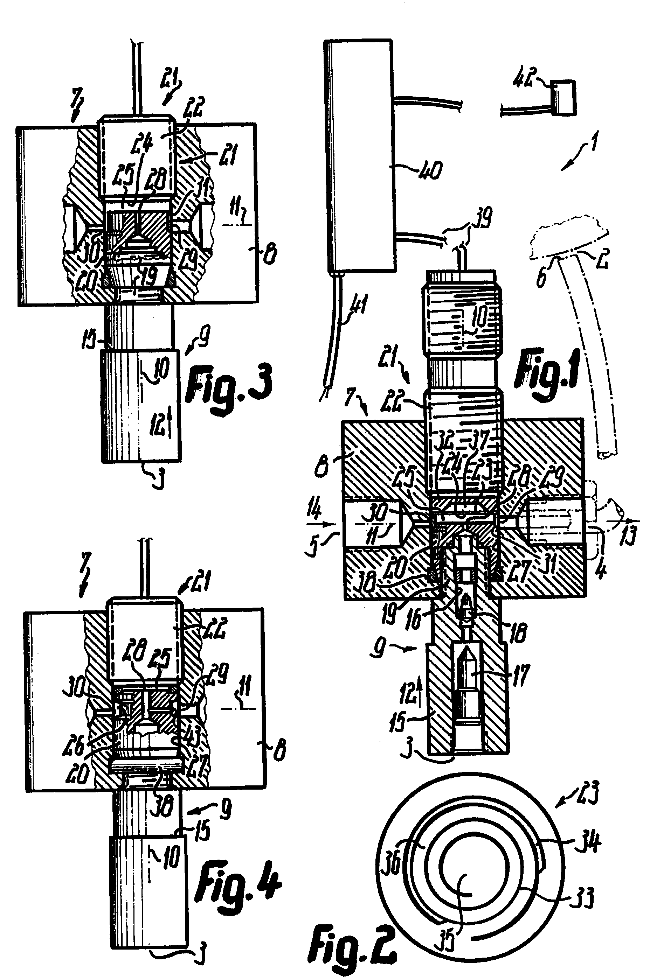

Die Zuführung und Mischung erfolgt innerhalb eines Anschlußgehäuses 7 bzw. dessen einteiligen Gehäusekörper 8. Das Medium wird mit einer Dosiereinrichtung 9, wie einem Zumeßventil, zugeführt, dessen Gehäusekörper 15 unmittelbar in den Körper 8 übergeht und an diesem festsitzend anliegt. Der rohrförmige Körper 15 begrenzt in seiner Längsachse 10 einen Kanal 16 mit zwei achsgleich hintereinander liegenden Ventilsitzen. Für jeden Ventilsitz ist ein gesondert beweglicher Ventilkörper 17, 18 in Form eines Steuerkolbens vorgesehen, welcher entgegen der Kraft nicht dargestellter Federn allein durch den Zuführdruck bzw. das parallel zur Achse 10 in Richtung 12 zugeführte Medium in Richtung 12 bewegt wird. Dabei öffnet der stromabwärtige Ventilkörper 18 zuerst seinen in Ausgangslage gemäß Fig. 1 geschlossenen Ventilsitz. Danach schließt der stromaufwärtige Ventilkörper 17 seinen bis dahin offenen Ventilsitz. Zwischen diesem Öffnen und Schließen strömt am Körper 18 vorbei eine genau dosierte Medienmenge in den Körper 8. Nach Sinken des Druckes in der Zuleitung 3 werden die Körper 17, 18 durch die im Kanal 16 liegenden Federn wieder entgegen Richtung 12 zurückgestellt, bis der Körper 17 öffnet und der Körper 18 schließt. Der Körper 15 weist in der Achse 10 einen in der Weite reduzierten Ansatz 19, wie eine Außengewinde-Hülse, auf, welche in ein Innengewinde im Inneren des Körpers 8 eingreift und zur Verspannung des Körpers 15 gegen eine äußere Fläche des Körpers 8 in Richtung 12 dient.

In seinem Inneren gehört zum Körper 8 ein Spann- bzw. Düsenkörper 20, der kappenförmig ausgebildet ist und dessen Mantel am Innenumfang ein Gewinde aufweist, in welchem der Ansatz 19 unmittelbar eingreift. Der Körper 20 ist gegen eine Innenschulter des Körpers 8 gegenüber diesem entgegen Richtung 12 unmittelbar festsitzend verspannt, wodurch auch der Körper 15 in Richtung 12 verspannt ist.

In den Körper 8 greift ferner ein Sensor 21 mit einem Sensorgehäuse 22 ein, welches in der Achse 10 liegt und durch ein Rohr mit einem Außengewinde gebildet sein kann. Das Gehäuse 22 ist festsitzend sowie entgegen Richtung 12 verspannt in den Körper 8 eingesetzt, der hierfür ein entsprechendes Innengewinde aufweist. Der Körper 15 ist zur Verspannung und zum zerstörungsfreien Lösen wie das Gehäuse 22 gegenüber dem Körper 8 drehbar. Die Zuleitung 3 liegt in der Achse 10 und die gemeinsamen Achsen 11 der Ableitung 4 und der Zuleitung 5 liegen rechtwinklig zur Achse 10, die sie schneiden. Die Ableitung bei 4 erfolgt in Richtung 13 und die Zuleitung bei 5 in Richtung 14.

Am inneren Ende des Gehäuses 22 weist der Sensor 21 einen scheibenförmigen Fühler gemäß Fig. 2 von weniger als einem halben Millimeter Dicke auf, der aus Metall, wie Federstahl, besteht und in der Achse 10 innerhalb des Körpers 8 liegt. Der Fühler 23 bildet mit einer Stirnfläche eine Fühl- bzw. Kontrollfläche 24, welche den Körpern 15, 20 mit weniger als 5, 3 oder 2 Millimeter Abstand unmittelbar gegenüberliegt und die stromabwärtige Stirnbegrenzung einer kreis- oder scheibenförmigen Meßkammer 25 bildet. Die gegenüberliegende Stirnbegrenzung ist durch die Stirnfläche des Körpers 20 oder unmittelbar durch den Körper 15 gebildet. Diese Stirnfläche ist formsteif und über den größten Teil ihrer Erstreckung eben. Die Stirnfläche 24 ist bis zur Umfangsfläche der Kammer 25 in Ausgangslage ebenfalls eben und wird durch Druckbelastung in der Kammer 25 geringfügig rückfedernd in Richtung 12 gewölbt.

Die Umfangsfläche der Kammer 25 ist durch eine vom Körper 8 begrenzte, zylindrische Bohrung 27 gebildet, deren Durchmesser kleiner als der Außendurchmessers des Gewindes des Gehäuses 22 und größer als das Außengewinde des Ansatzes 19 ist. Dadurch liegt am Innenumfang der Bohrung 27 der Körper 20 mit einem zylindrischen Zwischenabschnitt dicht und radialspielfrei an. Der stromabwärtige Auslaß des Körpers 15 liegt in der Stirnwand der Kappe 20 und schließt an einen von dieser begrenzten Düsenkanal an, welcher in der zugehörigen Stirnbegrenzung der Kammer 25 und in der Achse 10 eine Mündung 28 bildet. Dieser Düsenkanal hat über seine gesamte Länge einschließlich der Mündung 28 konstante Durchlaßquerschnitte, ist einteilig vom Körper 20 begrenzt und seine Durchlaßquerschnitte sind wesentlich kleiner als die des Auslasses des Körpers 15. Die Länge des Düsenkanales beträgt höchstens das Fünf- oder Vierfache oder insbesondere höchstens das Doppelte seines Durchmessers.

In die Kammer 25 münden radial auch die Anschluß- bzw. Verbindungsöffnungen 29, 30, nämlich der Auslaß 29 für die Ableitung 4 und der Fluideinlaß 30 für die Zuleitung 5. Beide sind durch das Ende eines jeweils geradlinigen Düsenkanales konstanter Querschnitte gebildet und liegen in der Umfangsfläche der Bohrung 27 gegen die Achse 10 und die Mündung 28 gerichtet. Jeder Düsenkanal liegt wie die Öffnungen 29, 30 in der Achse 11 und schließt an den trichterförmig konischen Boden einer erweiterten Bohrung an, welche mit einem Innengewinde zum festsitzenden Eingriff einer Gewindemuffe versehen ist, mit welcher die zugehörige flexible Leitung abgedichtet so zu befestigen ist, daß ihr zugehöriges Ende unmittelbar mit Axialpressung abgedichtet an den zugehörigen Düsenkanal anschließt. Dadurch werden Turbulenzen oder andere Strömungsstörungen vermieden. Rechts in Fig. 1 ist strichpunktiert der Anschluß des Rohres 4 mit einer Muffe angedeutet. Die Öffnungen 29, 30 liegen in einer gemeinsamen, zur Achse 10 rechtwinkligen Axialebene einander gegenüber und ihre Achsen 11 können auch im Winkel bzw. rechtwinklig zueinander liegen. Der Außenumfang des Körpers 20 hat angrenzend an die Kammer 25 Radialabstand vom Innenumfang der Bohrung 27, so daß ein Ringspalt 31 gebildet ist, welcher vom Außenumfang des Körpers 20 und vom Umfang der Bohrung 27 begrenzt ist. Dieser Spaltumfang des Körpers 20 überdeckt die Öffnung 29 bzw. 30 teilweise, z.B. so, daß die Achse 11 in der zugehörigen, am weitesten in die Kammer 25 ragenden sowie ebenen Stirnfläche des Körpers 20 liegt. Dadurch wird das Fluid aus dem Einlaß 30 gegen den Außenumfang des Körpers 20 gedrückt, teilweise an der Ringkante seiner ebenen Stirnfläche verwirbelt und teilweise in zwei entgegen gerichteten Teilströmen durch den Ringschlitz bis zum Auslaß 29 geführt, wo nochmals eine Verwirbelung und ein Rückstau ins Zentrum der Kammer 25 entstehen.

Innerhalb des Körpers 8 trägt das Gehäuse 22 an seinem inneren Ende einen Tragkörper 32 für den Fühler 23. Der Körper 32 weist wie der Fühler 23 gleichen Außendurchmesser wie der Körper 20 auf, so daß die Teile 23, 32 radialspielfrei und dicht am Innenumfang der Bohrung 27 anliegen. Der Fühler 23 ist so von einem abfallfrei hergestellten, beispielsweise um die Achse 10 spiralförmigen Schlitz 33 durchsetzt, daß sein zentraler Bereich eine Prallplatte 35 als bewegliches Fühlglied bildet, das von einer spiralförmigen Feder 36 eng umgeben und einteilig mit dieser ebenen Flachfeder sowie mit dem Außenumfang des Fühlers 23 ausgebildet ist. Die einander unmittelbar gegenüberliegenden Kanten des Schlitzes 33 werden in Ausgangslage vom Medium nicht durchströmt. Zwischen dem äußeren Ringrand und der Platte 35, insbesondere entlang eines Teiles der äußersten Windung des Schlitzes 33 weist der Fühler 23 eine Durchtrittsöffnung 34 auf, durch welchen die Räume an beiden Stirnseiten des Fühlers 23 permanent miteinander kommunizieren. Der mehr als halbkreisförmige Schlitz 34 ist am inneren, konvexen Umfang von einer kontinuierlichen Fortsetzung des Schlitzes 33 und am äußeren, konkaven Umfang mit Spaltabstand von dieser Fortsetzung begrenzt. Der Durchtritt 34 erstreckt sich über mehr als 180° um die Achse 10, ist jedoch als Dämpfung eng genug, um in der Kammer 25 einen plötzlichen Druckaufbau zu erlauben, ohne daß sich dieser in die Kammer 37 an der Rückseite des Fühlers 23 mit derselben Geschwindigkeit fortsetzt. Zuerst wird durch den hydraulischen Aufprall des Mediums nur die Platte 35 getroffen und in Richtung 12 ausgelenkt, wodurch sich erst der Schlitz 33 für den Durchtritt des Mediums in die Kammer 37 öffnet, weil die Feder 36 von der Spiralform in eine konische Wendelform überführt wird. Nur der undurchbrochene äußere Ringrand des Fühlers 23 liegt an der Stirnfläche des Tragkörpers 32 festsitzend und dicht an. Die Schlitze 33, 34 sowie die Platte 35 liegen im Bereich der Kammer 37, die durch eine Vertiefung in der Stirnfläche des Tragkörpers 32 gebildet ist. Im Gehäuse 22 ist ein nicht näher dargestellter Wandler vorgesehen, welcher die Bewegungen der Abschnitte 35, 36 in einen sich ändernden Meßstrom wandelt.

Die Körper 15, 20 könnten auch einteilig miteinander ausgebildet sein. Jeder der Körper 15, 20 kann auch einteilig mit dem Körper 8 ausgebildet sein. Ferner können die Körper 22, 32 bzw. 23, 32 auch einteilig miteinander bzw. mit dem Körper 8 ausgebildet sein. Beim dargestellten Ausführungsbeispiel wird der Körper 20 entgegen Richtung 12 durch die Aufnahmebohrung für das Gehäuse 22 in den Körper 8 eingesetzt und dann mit dem in Richtung 12 eingesetzten Körper 15 verbunden bzw. verschraubt, so daß ein Ringrand des Körpers 8 zwischen den Körpern 15, 20 axial verspannt wird. Der Körper 20 weist am Außenumfang seines Mantels eine konische Gegenfläche für eine ringförmige Dichtung 38 aus einem Elastomer auf, die in einer inneren Ringnut am stromaufwärtigen Ende der Bohrung 27 liegt. Auch der Ansatz 19 ist innerhalb des Körpers 20 mit einer ringförmigen, axial gespannten Dichtung abgedichtet.

Der Durchmesser der Bohrung 27 ist gleich dem Kerndurchmesser des Gewindes des Gehäuses 22, gegenüber welchem der Durchmesser des Gewindes des Ansatzes 19 um die Dicke des Mantels des Körpers 20 kleiner ist.

Vom Wandler führt innerhalb des Gehäuses 22 aus dessen äußeren Ende eine Leitung 39 heraus zu einem elektronischen Steuergerät 40, das über ein Leistungskabel 41 mit elektrischem Betriebsstrom versorgt wird und über eine weitere Signalleitung an ein Anzeigegerät 42, einen Regelkreis für die Maschine der Schmierstelle 2, die Förderpumpe für die Zuleitung 3 o. dgl. angeschlossen ist. Durch den Fluideinlaß 30 strömt permanent Luft als Hüllstrom in die Kammer 25 und durch den Auslaß 29 bis zur Öffnung 6. Durch impulsschnelle Druckerhöhung des Mediums in der Zuleitung 3 wird dann in der Einrichtung 9 eine Medienmenge dosiert und unter dem Förderdruck in die Kammer 25 eingespritzt. Der Spritzstrahl trifft auf die Kontrollfläche 24 der Platte 35, bewegt die Platte 35 in Richtung 12 und beeinflußt so den innerhalb des Körpers 8 liegenden Wandler zur Abgabe eines elektrischen Signals, welches über die Signalleitungen 39 an eine Auswerteeinheit im Gerät 40 weitergeleitet wird.

Erfolgt eine Auslenkung der Fläche 24 bzw. ist die Auslenkung der Fläche 24 für die gewünschte Fördermenge groß genug, so kann an der Anzeige 42 ein entsprechendes Bestätigungssignal akustisch oder optisch abgegeben werden. Erfolgt keine Auslenkung oder ist sie zu gering, so wird dies an der Anzeige 42 ebenfalls angezeigt und ein vom Gerät 40 gesteuerter Regelkreis kann denjenigen Teil der Maschine, welcher die zu schmierende Stelle 2 aufweist, verzögern oder stillsetzen. Unmittelbar nach Auftreffen des Ölschusses auf die Fläche 24 kehrt der Fühler 23 durch die Feder 36 zu seiner ebenen Ausgangslage zurück, so daß er den nächsten Ölschuß aus der Mündung 28 in gleicher Weise wieder erfassen kann.

Die Figuren 3 und 4 zeigen geringfügige Abwandlungen der Fig. 1, weshalb für einander entsprechende Teile die gleichen Bezugszeichen verwendet sind und auch alle Beschreibungsteile sinngemäß für alle Ausführungsformen gelten. Ferner können alle Merkmale aller Ausführungsformen an einer einzigen Ausführungsform vorgesehen sein.

Gemäß Fig. 3 liegt die Öffnung 29 bzw. 30 vollständig der radial inneren Begrenzung des Schlitzes 31 gegenüber, welcher in Richtung 12 über diese Öffnung 29 bzw. 30 vorsteht. Dadurch wird die Luft nach Verlassen des Einlasses 30 sofort an der inneren Schlitzbegrenzung des Körpers 20 nur in Richtung 12 axial umgelenkt, so daß sie aus der offenen Flanke des Schlitzes 31 wie aus einer Ringdüse in die Kammer 25 eintritt. Entsprechend umgekehrt gelangt sie nach Durchmischung mit dem Medium aus der Kammer 25 über die offene Schlitzflanke durch den Schlitz 31 in den Auslaß 29. Der in der Düse 28 beschleunigte Öltropfen trifft auf die sensible Fläche 24, von der ein variabel der Prellenergie entsprechendes Signal abgeleitet wird. Das Gehäuse 22 liegt hier nahezu vollständig innerhalb des Körpers 8, welcher auch den Körper 15 nahezu vollständig aufnehmen kann. Die Körper 8, 15 und 22 können bei allen drei Ausführungsformen gleich ausgebildet sein bzw. gleiche Anschluß- und Befestigungsmaße haben, so daß nur der Körper 20 bzw. dessen die Kammer 25 begrenzender Endabschnitt verändert werden muß.

Gemäß Fig. 4 ist die Mischkammer 26 gesondert von der Meßkammer 25 vorgesehen, deren axiale Höhe weniger als ein Fünftel oder ein Achtel ihres Außendurchmessers beträgt. Bis auf den Anschluß an die Mündung 28 ist die Scheibenkammer 25 dicht verschlossen. Hierzu ist eine Ringdichtung an den einander zugekehrten Stirnflächen der Körper 20, 22 verspannt. Diese Dichtung begrenzt den Außenumfang der Kammer 25. Die Kammer 26 ist um die Achse 10 ringförmig und von einer ringförmigen Nut im Außenumfang des Körpers 20 begrenzt. Unmittelbar in diese Nut und gegen deren zylindrischen Boden sind die Öffnungen 29, 30 gerichtet. Beiderseits der Öffnungen 29, 30 liegen die Flanken der Nut 26 dicht am Innenumfang der Bohrung 27 an. Vom Düsenkanal der Mündung 28 zweigt quer bzw. radial ein geradliniger Düsenkanal ab, der in der Bodenfläche der Kammer 26 als Mündung 43 für das Medium austritt. Dieser Düsenkanal liegt unmittelbar benachbart zum inneren Ende des Körpers 15. Die Staudurchlässe können bei dem Medienzufluß aus der Mündung 28 in der Kammer 25 einen Rückstau an den Öffnungen 28 bis 30 bewirken und daher eine kurzzeitige Druckerhöhung bewirken. Die innere Endfläche des Gehäuses 22 bildet die sensible Fläche 24 des Drucksensors, welche den Wandler betätigt.

Die Mündung 43 ist gemäß Fig. 4 zwar in der Achse 11 vorgesehen und unmittelbar gegen den Auslaß 29 gerichtet, kann aber demgegenüber auch um die Achse 10 so versetzt sein, daß sie mit Abstand zwischen den Öffnungen 29, 30 liegt oder gegen den Einlaß 30 gerichtet ist, so daß die Zerstäubung des Mediums noch weiter verbessert wird. Da der Düsenkanal der Mündung 43 kleinere Durchlaßquerschnitte als der Düsenkanal der Mündung 28 hat, strömt das aus dem Kanal 16 kommende Medium zunächst durch die Mündung 28 in die Meßkammer 25, erhöht dort sowie im zugehörigen Düsenkanal den Druck und aufgrund des Rückstaus wird dann über die Zweigleitung das Medium durch die Mündung 43 in die Mischkammer 26 gefördert.

Die Druckerhöhung in der Kammer 25 beeinflußt dabei den Sensor 21 in der beschriebenen Weise. Die Kontrollfläche 24 kann auch unbeweglich starr sein und einen dichten Verschluß des zugehörigen Endes der Kammer 25 bilden, wenn ein geeigneter Wandler, wie ein Piezoelement, ein Dehnmeßstreifen o. dgl. vorgesehen ist. Durch die Parallelschaltung der Kammern 25, 26 gemäß Fig. 4 kann die Auslösung der Druckmessung noch weiter verbessert werden.

Während bei den Ausführungen gemäß den Figuren 1 und 3 die Kammer 25 nach dem Ölschuß durch die strömende Luft wieder entleert wird, bleibt die Kammer 25 gemäß Fig. 4 nach dem Priming ständig mit Medium blasenfrei gefüllt. Die Prallplatte 35 könnte auch einen von der Feder 36 gesonderten Bauteil bilden, z.B. wenn die Feder als Schraubendruckfeder ausgebildet ist. Ist die Schmierstelle 2 an einem Lager vorgesehen, so ist die Anzahl der Ölschüsse aus den Mündungen 28, 43 zweckmäßig drehzahlgesteuert. Z.B. kann nach jeweils n Umdrehungen der Schmierstelle 2 ein Ölschuß ausgelöst werden, wobei sich mit zunehmender oder abnehmender Drehzahl die Zahl n nicht linear bzw. nicht proportional ändern kann. An der Öffnung 6 tritt das Aerosol nicht als sogenannter Rauch, sondern als gröberes Aerosol aus, um ein Verrauchen bzw. eine Auswolkung des Schmiermittels an der Schmierstelle zu vermeiden. Alle Eigenschaften und Wirkungen können genau oder nur ungefähr bzw. im wesentlichen wie beschrieben vorgesehen sein und je nach den Erfordernissen auch stärker davon abweichen.

## Patentansprüche

1. Flußwächter für ein fließendes Medium, wie Schmierstoff, mit wenigstens einem Gehäuse (7, 15, 22), wie einem Anschlußgehäuse (7), dadurch gekennzeichnet, daß im Gehäuse (7) eine Meßkammer (25) vorgesehen und einem Fühler (23) zugeordnet ist.

2. Flußwächter nach Anspruch 1, dadurch gekennzeichnet, daß die Meßkammer (25) innerhalb des Anschlußgehäuses (7) liegt und and den Verbindungsöffnungen (28 bis 30), wie eine ihr gegenüber verengte und am Ende eines Mündungskanales vorgesehene Mündung (28) für das Medium, angeschlossen ist, daß insbesondere an die Meßkammer (25) der Fühler (23) für das Medium mit einer permanent im Abstand von der Mündung (28) liegenden Kontrollfläche (24) angrenzt, und daß vorzugsweise der Fühler (23) als Strömungsfühler, wie Druckaufnehmer, ausgebildet ist.

3. Flußwächter nach Anspruch 1 oder 2, dadurch gekennzeichnet, daß die Meßkammer (25) eine Druckkammer ist, von deren Verbindungsöffnungen, nämlich der Mündung (28) und einem Auslaß (29), wenigstens eine als verengter Staudurchlaß ausgebildet ist, daß insbesondere der Staudurchlaß einen Durchlaßquerschnitt von höchstens 10 bis 5 mm², wie höchstens 3 mm², aufweist, und daß vorzugsweise die Mündung (28) einen kleineren Durchlaßquerschnitt als der verengte Staudurchlaß des Auslasses (29) aufweist.

4. Flußwächter nach einem der vorhergehenden Anprüche, dadurch gekennzeichnet, daß die Meßkammer (25) einen Raum mit einer Mischkammer für das Medium und einen Fluidstrom, wie Gas, bildet und die Verbindungsöffnungen einen Fluideinlaß (30) umfassen, daß insbesondere der Fluideinlaß (30) als verengter Durchlaß ausgebildet ist, und daß vorzugsweise der Fluideinlaß (30) einen Durchlaßquerschnitt aufweist, welcher größer bzw. kleiner als der Durchlaßquerschnitt mindestens einer durch die Mündung (28) und den Auslaß (29) gebildeten Verbindungsöffnungen ist.

5. Flußwächter nach einem der vorhergehenden Ansprüche, dadurch gekennzeichnet, daß die Mündung (28) der Meßkammer (25) und der Mündungskanal als gegenüber ihrem stromaufwärts anschließenden Zuführkanal (16) verengte Strahldüse ausgebildet sind, daß insbesondere die Mündung (28) etwa in der Mitte zwischen dem Auslaß (29) und dem Fluideinlaß (30) liegt, und daß vorzugsweise die Meßkammer (25) im wesentlichen symmetrisch zur Mittelachse (11) des Auslasses (29) quer gerichteten Achse (10) liegt.

6. Flußwächter nach einem der vorhergehenden Ansprüche, dadurch gekennzeichnet, daß der Meßkammer (25) ein Fluideinlaß (30) und ein Auslaß (29) für ein Zweitmedium zugeordnet sind sowie in einer gemeinsamen, zur Achse (10) der Mündung (28) quer liegenden Axialebene, wie achsgleich, liegen, daß insbesondere der Fluideinlaß (30) und der Auslaß (29) verengte Enden von Bohrungen in dem Anschlußgehäuse (7) sind, und daß vorzugsweise wenigstens eine der Bohrungen zur unmittelbaren Aufnahme eines Anschlußrohres (4) ausgebildet ist.

7. Flußwächter nach einem der vorhergehenden Ansprüche, dadurch gekennzeichnet, daß die Mündung (28) der Meßkammer (25) an ein je Arbeitszyklus eine dosierte Menge des Mediums zuführende Dosiereinrichtung (9), wie ein Zumeßventil, angeschlossen ist, daß insbesondere das Gehäuse ein Dosiergehäuse (15) der Dosiereinrichtung (9) umfaßt, das unmittelbar mit dem Anschlußgehäuse (8) verbunden ist, und daß vorzugsweise mindestens eines der Gehäuse (8, 15) einteilig ausgebildet ist.

8. Flußwächter nach einem der vorhergehenden Ansprüche, dadurch gekennzeichnet, daß die Mündung (28) der Meßkammer (25) von einem gegen ihre Strömungsrichtung (12) in das Anschlußgehäuse (8) eingesetzten Düsenkörper (20) begrenzt ist, daß insbesondere der Fühler (23) gegen die Strömungsrichtung (12) der Mündung (28) in das Anschlußgehäuse (8) eingesetzt ist, und daß vorzugsweise der Düsenkörper (20) und die Kontrollfläche (24) die Meßkammer (25) an wenigstens eine Stirnseite begrenzen.

9. Flußwächter nach einem der vorhergehenden Ansprüche, dadurch gekennzeichnet, daß ein die Mündung (28) der Meßkammer (25) aufweisender Düsenkörper (20) axial gegenüber dem Anschlußgehäuse (8) verspannt ist, daß insbesondere der Düsenkörper (20) mit dem Dosiergehäuse (15) und mit diesem an dem Anschlußgehäuse (8) verspannt ist, und daß vorzugsweise das Dosiergehäuse (15) einen vom Düsenkörper (20) ungebenen Anschlußvorsprung (19) aufweist.

10. Flußwächter nach einem der vorhergehenden Ansprüche, dadurch gekennzeichnet, daß eine Kontrollfläche (24) des Fühlers (23) an einem unter Druckbelastung in der Meßkammer (25) sich bewegenden Fühlglied (35) vorgesehen ist, daß insbesondere der Fühler (23) eine geschlitzte Federscheibe ist, die einen feststehenden Bereich und einen bewegbaren Prallbereich (35) mit der Kontrollfläche (24) aufweist, und daß vorzugsweise das Fühlglied (35) einen elektrischen Meßstrom verändert.

11. Flußwächter nach einem der vorhergehenden Ansprüche, dadurch gekennzeichnet, daß die Meßkammer (25) an einer Stirnseite einen Ringraum (31) bildet, an welchen der Auslaß (29) unmittelbar anschließt, daß insbesondere der Ringraum (31) im Abstand von der Kontrollfläche (24) liegt, und daß vorzugsweise die Meßkammer (25) und eine Mischkammer (26) gesonderte erweiterte Räume sind, wobei stromaufwärts von der Mündung (28) an deren Mündungskanal ein in die Mischkammer (26) führender Zweigkanal angeschlossen ist, der als Staudurchlaß ausgebildet ist.
